# FASCICULE DE BREVET EUROPEEN

(11) **EP 0 381 575 B1**
(45) Date de publication et mention de la délivrance du brevet: **26.05.1993**
(21) Numéro de dépôt: 90400250.8
(22) Date de dépôt: 30.01.1990
(51) Int. Cl.: F16C 39/06, H02K 7/09, H02K 16/00

(54) **Système de stabilisation mécanique à contre-rotation à moteur unique**
Mechanisches Stabilisierungssystem mit Gegendrehung und einzigem Motor
Mechanical stabilisation system using single motor counter rotation

(30) Priorité: 31.01.1989 FR 8901218
(43) Date de publication de la demande: 08.08.1990
(73) Titulaire: SOCIETE EUROPEENNE DE PROPULSION, 92150 Suresnes (FR)
(72) Inventeur: Atlas, Gérard, F-27950 Saint Marcel (FR)
(74) Mandataire: Thévenet, Jean-Bruno

(56) Documents cités:
- DE-A- 3 500 716
- FR-A- 2 329 095
- FR-A- 2 339 762
- US-A- 1 612 330
- US-A- 3 435 704
- PATENT ABSTRACTS OF JAPAN vol. 9, no. 23 (E-293)(1746) 30 janvier 1985, & JP-A-59 169353 (TOKYO DENKI K.K) 29 septembre 1984,
- Aerospace Mechanisms Symposium, Houston, May 1987, A Reactionless Precision Pointing Actuator

## Description

La présente invention a pour objet un système de stabilisation mécanique à contre-rotation à moteur unique, comprenant un support à stabiliser, un rotor utile monté sur le support à l'aide de paliers et solidaire d'un organe utile dont au moins un paramètre associé à la rotation du rotor utile est variable en fonction du temps, un moteur électrique pour assurer l'entraînement en rotation du rotor utile, un détecteur interposé entre le rotor utile et le support pour mesurer ledit paramètre associé à la rotation du rotor utile auquel est imposée une loi de mouvement prédéterminée en fonction du temps, et un circuit d'asservissement recevant les signaux émis par le détecteur pour modifier les caractéristiques de fonctionnement du moteur de façon à respecter ladite loi de mouvement prédéterminée par le rotor utile.

Les systèmes tournants dont au moins un paramètre tel que la position, la vitesse, le couple, l'accélération, est asservi en fonction du temps, tendent à perturber, par un effet de réaction, le support sur lequel ils sont montés. De telles perturbations peuvent être en général considérées comme négligeables lorsque le support présente une masse importante, comme c'est le cas par exemple pour un gros navire. En revanche, les perturbations deviennent conséquentes et doivent être compensées, si le support présente une masse relativement réduite ou doit conserver une position très précise. C'est le cas notamment pour les satellites devant conserver en orbite une attitude bien définie ou assujettis à des impératifs de microgravité : les systèmes embarqués sur un satellite, tels que des systèmes de rotation d'antenne ou de panneaux solaires à vitesse non constante tendent à perturber de façon intolérable la stabilité du satellite en l'absence de systèmes de stabilisation.

On a déjà proposé dans un compte rendu d'une conférence de Peter Wiktor intitulée "A Reactionless Precision Pointing Actuator", présentée au "Aerospace Mechanism Symposium" tenu à Houston en mai 1987, de réaliser un dispositif de commande d'une plate-forme gyroscopique qui assure en même temps une stabilisation pour empêcher l'apparition d'un couple de réaction sur le support de la plate-forme constitué par un vaisseau spatial ou un satellite. Pour assurer un découplage entre les mouvements de la plate-forme gyroscopique et la commande de l'attitude du vaisseau spatial, un mouvement de contre-rotation est imparti à une roue de réaction incorporée dans la plate-forme gyroscopique et munie d'un arbre coaxial à l'axe de la plate-forme gyroscopique et entraîné en rotation en sens inverse par rapport à cette dernière à l'aide d'un moteur électrique de roue de réaction dont le stator est monté sur la plate-forme gyroscopique et le rotor est solidaire dudit arbre coaxial. Un second moteur d'entraînement direct dont le stator est solidaire du support et le rotor est solidaire de l'axe de la plate-forme gyroscopique sert à la fois à l'entraînement de la plate-forme gyroscopique pour donner à celle-ci une position angulaire ou une vitesse de rotation en fonction d'une loi prédéterminée et pour compenser les couples parasites dûs aux frottements dans les paliers ou à la présence de câbles d'alimentation électrique qui empêchent des rotations angulaires supérieures à 2 π radians. Le circuit d'asservissement associé au moteur électrique de roue de réaction présente une bande passante située dans une plage de fréquences plus élevée que la bande passante des circuits d'asservissement associés au moteur d'entraînement direct.

Le mode de réalisation décrit dans l'article précité conduit à la mise en oeuvre de deux moteurs électriques de puissance non négligeable ce qui accroît la masse et la dépense d'énergie, et de plus ne se trouve pas adapté à des applications dans lesquelles l'organe tournant utile doit effectuer des rotations de plusieurs tours.

La présente invention vise à remédier aux inconvénients précités et à permettre la réalisation d'un dispositif de stabilisation mécanique plus commode à mettre en oeuvre, plus précis, moins encombrant et qui permette un élargissement des applications possibles.

Ces buts sont atteints grâce à un système de stabilisation mécanique à contre-rotation à moteur unique, comprenant un support à stabiliser, un rotor utile monté sur le support à l'aide de paliers et solidaire d'un organe utile dont au moins un paramètre associé à la rotation du rotor utile est variable en fonction du temps, un moteur électrique pour assurer l'entraînement en rotation du rotor utile, un détecteur interposé entre le rotor utile et le support pour mesurer ledit paramètre associé à la rotation du rotor utile auquel est imposée une loi de mouvement prédéterminée en fonction du temps, et un circuit d'asservissement recevant les signaux émis par le détecteur pour modifier les caractéristiques de fonctionnement du moteur de façon à respecter ladite loi de mouvement prédéterminée par le rotor utile,
caractérisé en ce que les paliers de support du rotor utile sont des paliers sans frottement tels que des paliers magnétiques ou des paliers à gaz, en ce que le système comporte en outre un rotor antagoniste emboîté qui est monté de façon concentrique sur le rotor utile à l'aide de paliers sans frottement tels que des paliers magnétiques ou des paliers à gaz, et qui supporte un organed'inertie antagoniste, et en ce que le moteur est interposé entre le rotor utile et le rotor antagoniste pour entraîner en rotation en sens inverses le rotor utile et le rotor antagoniste, de telle sorte que les perturbations de couple résiduelles générées sur le support par le mouvement du rotor utile sont annulées par le mouvement antagoniste et simultané du rotor antagoniste, le rapport des vitesses du rotor utile et du rotor antagoniste étant tel que le moment cinétique total du rotor utile et du rotor antagoniste est maintenu égal à zéro.

Selon la présente invention, il est ainsi possible de maintenir nul le moment cinétique global du système en n'utilisant qu'un seul moteur électrique, ce qui permet de limiter la masse globale du système.

Selon un aspect particulier de la présente invention, le moteur comporte des masses polaires sans bobinages solidaires du rotor utile et des masses polaires bobinées solidaires du rotor antagoniste. L'organe d'inertie antagoniste solidaire du rotor antagoniste est de préférence constitué par des éléments utiles assurant des fonctions techniques tels que les circuits d'alimentation et d'asservissement des bobinages des masses polaires bobinées du moteur.

Avantageusement, les paliers de support du rotor utile sont constitués par des paliers magnétiques actifs dont les électro-aimants et les détecteurs associés sont montés sur le support en regard d'une face externe du rotor utile, et les paliers de support du rotor antagoniste par rapport au rotor utile sont constitués par des paliers magnétiques actifs dont les électro-aimants et les détecteurs associés sont montés sur le rotor antagoniste en regard d'une face interne du rotor utile.

Les circuits de commande des paliers magnétiques actifs de support du rotor antagoniste peuvent être disposés dans l'organe solidaire du rotor antagoniste pour constituer au moins une partie de l'inertie antagoniste permettant l'annulation du moment cinétique total du rotor utile et du rotor antagoniste.

L'invention peut s'appliquer à divers ensembles tournants montés sur des structures de support sur terre, sur mer, dans l'air, dans la mer, dans l'espace avec ou sans présence de forces de gravité.

Selon une application particulièrement intéressante, le support est constitué par un satellite ou une station spatiale et l'organe utile monté sur le rotor utile est constitué par un organe tournant tel qu'une antenne ou un panneau solaire.

D'autres caractéristiques et avantages de l'invention ressortiront de la description suivante de modes particuliers de réalisation de l'invention, donnés à titre d'exemples, en référence aux dessins annexés, sur lesquels :
- la figure 1 est une vue schématique d'un premier mode de réalisation d'un système de stabilisation mécanique à contre-rotation à rotors emboîtés avec un moteur électrique unique agissant sur les rotors et des paliers sans frottement, le moteur étant disposé entre les paliers,
- la figure 2 est une vue analogue à la figure 1 montrant une variante de réalisation dans laquelle le moteur électrique unique est monté en porte-à-faux sur les rotors par rapport aux paliers, et
- la figure 3 est une vue en demi-coupe axiale d'un exemple particulier de système de stabilisation tel que celui de la figure 1 avec des rotors emboîtés concentriques et un moteur électrique dont les masses polaires bobinées sont solidaires du rotor antagoniste, les rotors étant montés à l'aide de paliers magnétiques actifs.

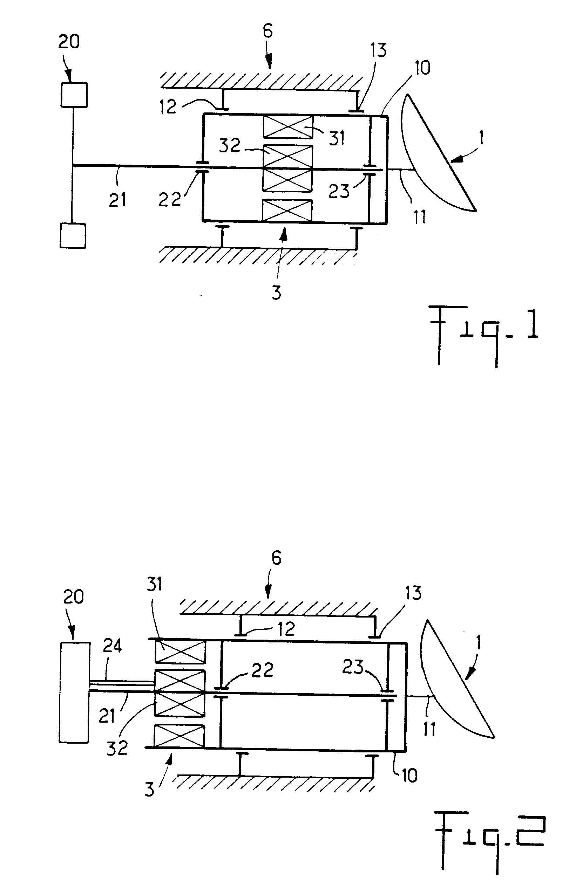

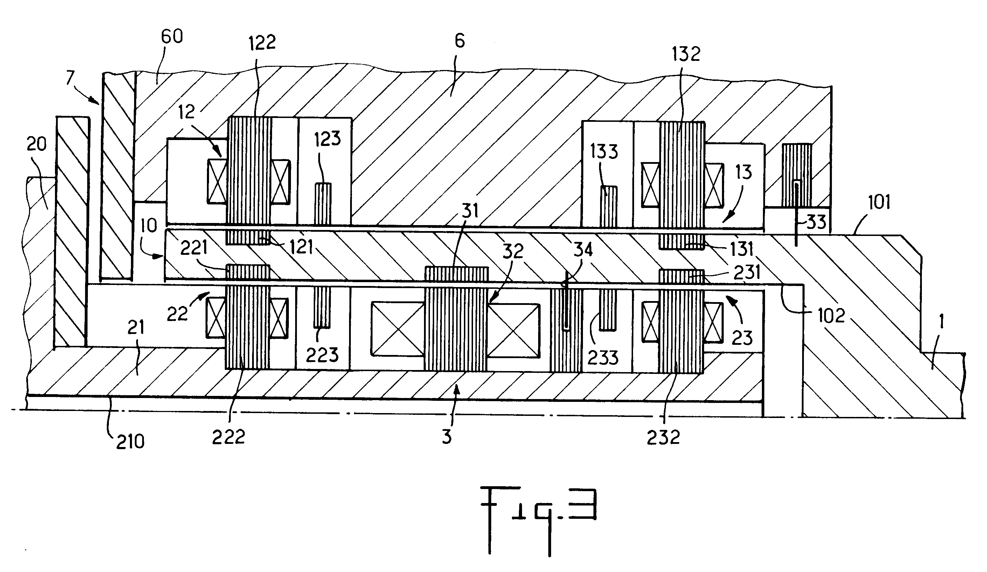

On voit sur les figures 1 et 2 la représentation schématique d'un ensemble tournant comprenant un rotor utile 10 auquel est rattaché par un arbre 11 prolongeant axialement le rotor utile 10 un organe utile 1 tel qu'une antenne par exemple, dont la position angulaire ou un autre paramètre lié à la rotation du rotor utile 10, tel que le couple, l'accélération ou la vitesse doit être ajusté en permanence selon une loi prédéterminée, sans que des perturbations soient transmises au support 6 sur lequel le rotor utile 10 est monté, par exemple au niveau de l'arbre 11, au moyen de paliers 12, 13 sans frottement tels que des paliers à gaz ou des paliers magnétiques.

Afin de permettre une commande des mouvements du rotor utile 10 sans perturbation sur le support 6, qui peut être par exemple un satellite de relativement faible masse, un rotor antagoniste 21 auquel est rattaché un organe d'inertie antagoniste 20 est monté sur le rotor utile 10 à l'aide de paliers 22, 23 qui sont également des paliers sans frottement tels que des paliers à gaz ou des paliers magnétiques et subit un mouvement activement commandé de sens inverse à celui du rotor utile 10 et de valeur telle que le support 6 ne subit pas de perturbation générée par les différents organes en mouvement, c'est-à-dire que les variations de moment cinétique global ressenti par le support sont nulles.

Selon la présente invention, un moteur électrique unique 3 asservi par des circuits électroniques d'asservissement non représentés sur le dessin est interposé entre le rotor utile 10 et le rotor antagoniste 21 et contribue à la fois à conférer au rotor utile 10 et à l'organe utile 1 un mouvement de rotation commandé selon des paramètres de mouvement variables et prédéterminés évoluant dans le temps, et à entraîner le rotor antagoniste 21 et par suite l'organe de réaction 20 en sens contraires, le rotor utile 10 et le rotor antagoniste 21 étant animés par rapport au support de vitesses de sens contraires selon un rapport qui résulte de l'égalité des moments cinétiques acquis par chacun de ces rotors 10,21 en l'absence de frottement, le moment cinétique total devant rester nul.

Un détecteur 33 (qui n'a été représenté que sur la figure 3) est interposé entre le rotor utile 10 et le support 6. Ce détecteur mesure le paramètre (par exemple : vitesse, ou couple, ou accélération) associé au mouvement du rotor utile 10, auquel on veut imposer une loi prédéterminée en fonction du temps. La valeur de ce paramètre, mesurée par le détecteur 33, est transmise aux circuits d'asservissement qui modifient les caractéristiques appropriées de fonctionnement du moteur 3, de façon à respecter la loi de mouvement prédéterminée pour le rotor utile 10. Quelle que soit cette loi, la rotation du rotor antagoniste 21 évite que des perturbations soient transmises au support 6.

En cas de besoin, selon les types d'asservissement utilisés, un détecteur différentiel 34 (représenté sur la figure 3) peut être interposé entre le rotor utile 10 et le rotor antagoniste 21 pour permettre un contrôle permanent du mouvement relatif de ces deux rotors concentriques 10, 21 emboîtés l'un dans l'autre.

Le moteur unique 3 peut être alimenté par un transformateur tournant ou par un collecteur tournant (fig 3), le transformateur tournant 7 n'engendrant lui-même pas de réaction de couple sur l'ensemble tournant.

Dans ce cas, les angles positifs ou négatifs maximaux que peuvent parcourir le rotor utile 10 et le rotor antagoniste 21 sont pratiquement illimités et peuvent constituer un grand nombre de tours.

Ceci permet par exemple de prendre en compte le cas où le rotor utile 10 atteint d'importantes amplitudes de part et d'autre d'une valeur moyenne nulle, ou des amplitudes quelconques de part et d'autre d'une valeur moyenne non nulle, ces amplitudes étant fonction de la mission à remplir par l'inertie utile de l'organe utile 1 solidaire du rotor utile 10.

Les modes de réalisation des figures 1 à 3 s'appliquent également bien au cas où le rotor utile 10 présente des amplitudes faibles et une valeur moyenne nulle tandis que le moment d'inertie JA du rotor antagoniste 21 est sensiblement inférieur au moment d'inertie JU du rotor utile 10, ce qui impose au rotor antagoniste 21 des amplitudes importantes et pouvant atteindre un grand nombre de tours.

Selon des variantes de réalisation, les bobinages du moteur principal 3 qui peuvent être solidaires du rotor utile 10 ou du rotor antagoniste 21 (figures 2 et 3) sont alimentés par une nappe de fils enroulée en spirale permettant au rotor correspondant (rotor utile 10 ou rotor antagoniste 21 sur les figures 2 et 3) de présenter des rotations de plusieurs tours.

Selon un exemple particulier, l'amplitude des mouvements angulaires du rotor utile 10 est limitée et reste comprise entre des valeurs - ϑU et + ϑU qui peuvent toutefois être égales à plusieurs tours. Dans ce cas, le moteur d'entraînement 3 commun au rotor utile 10 et au rotor antagoniste 21 comporte des masses polaires 32 sans bobinage solidaires du rotor antagoniste 21 et des masses polaires bobinées 31 solidaires du rotor utile 10. Les bobinages de ces masses polaires 31 sont alimentées par une nappe de fils enroulée en spirale permettant à tout instant au rotor utile 10 de présenter sans restriction une amplitude comprise dans la plage de valeurs comprises entre - ϑU et + ϑU.

L'invention prend aussi en compte le cas où la vitesse moyenne du rotor utile 10 est nulle, et l'amplitude du rotor utile 10 présente une valeur limitée, mais pouvant être égale à plusieurs tours, autour de sa position moyenne. Dans ce cas, l'amplitude du rotor antagoniste 21 est déterminée pour rester également comprise entre des valeurs - ϑA et + ϑA qui peuvent toutefois être égales à plusieurs tours. Les valeurs limites - ϑA et + ϑA sont déterminées en donnant au moment d'inertie JA du rotor antagoniste 21 une valeur appropriée qui tient compte de l'amplitude maximale du rotor utile, du moment d'inertie du rotor utile 10 et de la loi de mouvement prédéterminée imposée à ce rotor utile 10. Dans ce cas, le moteur d'entraînement 3 commun au rotor utile 10 et au rotor antagoniste 21 comporte des masses polaires 31 sans bobinage solidaires du rotor utile 10 et des masses polaires bobinées 32 solidaires du rotor antagoniste 21, comme représenté sur les figures 1 et 2. Les bobinages de ces masses polaires 32 sont alimentés par une nappe de fils enroulée en spirale permettant à tout instant au rotor antagoniste 21 de présenter sans restriction une amplitude comprise dans la plage de valeurs s'étendant entre - ϑA et + ϑA.

Dans les divers modes de réalisation décrits, de préférence, la masse de l'organe 20 constituant l'inertie antagoniste est composée d'éléments utiles assurant des fonctions techniques, ces éléments utiles pouvant être par exemple les circuits d'asservissement du moteur principal 3 reliés à celui-ci par des fils de liaison 24.

Le système de stabilisation selon l'invention peut présenter des configurations diverses. Ainsi, le moteur principal 3 peut être monté sur des parties du rotor utile 10 et du rotor antagoniste 21 qui sont en porte-à-faux par rapport aux paliers 12, 13 et 22, 23 respectivement (figure 2) ou au contraire être disposé sur les rotors 10 et 21 dans une position centrale entre les paliers 12, 13 et 22, 23 (Figures 1 et 3). Le moteur 3 pourrait encore être monté par exemple en porte-à-faux sur le rotor antagoniste 21 par rapport aux paliers 22, 23 tout en étant situé entre les paliers 12, 13 sur le rotor utile 10.

Le mode de réalisation de la figure 3 montre un rotor utile 10 et un rotor antagoniste 21 concentriques entre eux et par rapport à une partie de support 60 de forme cylindrique de manière à définir une structure compacte permettant de disposer les paliers 22, 23 de support du rotor antagoniste 21 par rapport au rotor utile 10 dans les mêmes plans radiaux dans lesquels sont disposés les paliers 12, 13 de maintien du rotor utile 10 par rapport à la structure du support de base 6.

Dans le mode de réalisation de la figure 3, le moteur unique 3 est monté dans la partie centrale des parties concentriques des rotors 10, 21 situées entre les paliers 12, 22 et 13, 23, avec un détecteur associé 34 détectant les positions relatives des rotors 10 et 21. Le détecteur 34, de même que le détecteur 33 de la position du rotor 10 par rapport au support 6 peuvent toutefois être disposés en des emplacements différents de ceux représentés sur le dessin.

Dans le mode de réalisation de la figure 3, les paliers sans frottement 12, 13, 22, 23 sont constitués par des paliers magnétiques actifs comprenant des ensembles d'électro-aimants 122, 132, 222, 232 disposés en regard d'armatures 121, 131, 221, 231. Les enroulements d'électro-aimants sont alimentés à partir de circuits d'asservissement commandés à l'aide de détecteurs de position 123, 133, 223, 233 disposés au voisinage des paliers magnétiques 12, 13, 22, 23.

Comme représenté sur la figure 3, les électro-aimants 122, 132 des paliers magnétiques 12, 13, et leurs détecteurs associés 123, 133 sont montés sur le support 6 en regard d'une face externe 101 du rotor utile 10 tandis que les électro-aimants 222, 232 des paliers magnétiques 22, 23 et les détecteurs associés 223, 233 sont montés sur le rotor antagoniste 21 en regard d'une face interne 102 du rotor utile 10.

Cet agencement permet de disposer les circuits de commande des paliers magnétiques 12, 13 sur le support 6 avec des connexions statiques et les circuits de commande des paliers magnétiques 22, 23 dans l'organe d'inertie antagoniste 20 solidaire du rotor antagoniste 21. Ces derniers circuits contribuent ainsi à constituer une partie de l'inertie antagoniste permettant l'annulation du moment cinétique total du rotor utile 10 et du rotor antagoniste 21.

## Revendications

1. Système de stabilisation mécanique à contre-rotation à moteur unique, comprenant un support à stabiliser (6), un rotor utile (10) monté sur le support (6) à l'aide de paliers (12, 13) et solidaire d'un organe utile (1) dont au moins un paramètre associé à la rotation du rotor utile (10) est variable en fonction du temps, un moteur électrique (3) pour assurer l'entraînement en rotation du rotor utile (10), un détecteur (33) interposé entre le rotor utile (10) et le support (6) pour mesurer ledit paramètre associé à la rotation du rotor utile (10) auquel est imposée une loi de mouvement prédéterminée en fonction du temps, et un circuit d'asservissement recevant les signaux émis par le détecteur (33) pour modifier les caractéristiques de fonctionnement du moteur (3) de façon à respecter ladite loi de mouvement prédéterminée par le rotor utile (10),
caractérisé en ce que les paliers (12, 13) de support du rotor utile (10) sont des paliers sans frottement tels que des paliers magnétiques ou des paliers à gaz, en ce que le système comporte en outre un rotor antagoniste emboîté (21) qui est monté de façon concentrique sur le rotor utile (10) à l'aide de paliers sans frottement (22, 23) tels que des paliers magnétiques ou des paliers à gaz, et qui supporte un organe d'inertie antagoniste (20), et en ce que le moteur (3) et interposé entre le rotor utile (10) et le rotor antagoniste (21) pour entraîner en rotation en sens inverses le rotor utile (10) et le rotor antagoniste (21), de telle sorte que les perturbations de couple résiduelles générées sur le support (6) par le mouvement du rotor utile (10) sont annulées par le mouvement antagoniste et simultané du rotor antagoniste (21), le rapport des vitesses du rotor utile (10) et du rotor antagoniste (21) étant tel que le moment cinétique total du rotor utile (10) et du rotor antagoniste (21) est maintenu égal à zéro.

2. Système selon la revendication 1, caractérisé en ce que le moteur (3) comporte des masses polaires sans bobinages (31) solidaires du rotor utile (10) et des masses polaires bobinées (32) solidaires du rotor antagoniste (21).

3. Système selon la revendication 2, caractérisé en ce que l'organe d'inertie antagoniste (20) solidaire du rotor antagoniste (21) est constitué par des éléments utiles assurant des fonctions techniques tels que les circuits d'alimentation et d'asservissement des bobinages des masses polaires bobinées (32) du moteur (3).

4. Système selon l'une quelconque des revendications 1 à 3, caractérisé en ce que les paliers (12, 13) de support du rotor utile (10) sont constitués par des paliers magnétiques actifs dont les électro-aimants (122, 132) et les détecteurs associés (123, 133) sont montés sur le support (6) en regard d'une face externe (101) du rotor utile (10), et en ce que les paliers (22, 23) de support du rotor antagoniste (21) par rapport au rotor utile (10) sont constitués par des paliers magnétiques actifs dont les électro-aimants (222, 232) et les détecteurs associés (223, 233) sont montés sur le rotor antagoniste (21) en regard d'une face interne (102) du rotor utile (10).

5. Système selon la revendication 4, caractérisé en ce que les circuits de commande des paliers magnétiques actifs (22, 23) de support du rotor antagoniste (21) sont disposés dans l'organe d'inertie antagoniste (20) solidaire du rotor antagoniste (21) pour constituer au moins une partie de l'inertie antagoniste permettant l'annulation du moment cinétique total du rotor utile (10) et du rotor antagoniste (21).

6. Système selon l'une quelconque des revendications 1 à 5, caractérisé en ce que le support (6) est constitué par un satellite ou une station spatiale, et l'organe utile (1) monté sur le rotor utile (10) est constitué par un organe tournant tel qu'une antenne ou un panneau solaire.

## Patentansprüche

1. Mechanisches Stabilisierungssystem mit Gegendrehung und einzigem Motor, mit einem zu stabilisierenden Träger (6), einem Nutz- oder nützlichen Rotor (10), der auf dem Träger (6) mit Hilfe von Lagern (12, 13) angebracht ist und mit einem Nutz- oder nützlichen Organ (1), von dem wenigstens ein Parameter, der mit der Drehung des nützlichen Rotors (10) verbunden ist, veränderlich ist, in Abhängigkeit von der Zeit, einem Elektromotor (3), um den Drehantrieb des nützlichen Rotors (10) sicherzustellen, einem Detektor (33), der zwischen dem nützlichen Rotor (10) und dem Träger (6) angeordnet ist, um den der Drehung des nützlichen Rotors (10) zugeordneten Parameter zu messen, auf den ein vorbestimmtes Bewegungsgesetz in Abhängigkeit von der Zeit aufgebracht wird, und einem Regelungsschaltkreis, der die von dem Detektor (33) ausgegebenen Signale empfängt, um die Betriebseigenschaften des Motors (3) zu modifizieren, derart, daß das vorbestimmte Bewegungsgesetz durch den nützlichen Rotor (10) befolgt wird,
dadurch gekennzeichnet, daß die Lager (12, 13) des Trägers des nützlichen Rotors (10) Lager ohne Reibung, wie beispielsweise magnetische Lager oder Gaslager sind, daß das System weiterhin einen gekapselten gegenwirkenden Rotor (21) aufweist, der auf konzentrische Weise auf dem nützlichen Rotor (10) mit Hilfe von reibungslosen Lagern (22, 23), wie beispielsweise magnetischen Lagern oder Gaslagern angebracht ist und der ein gegenwirkendes Trägheitsorgan (20) stützt, und daß der Motor (3) zwischengesetzt ist zwischen dem nützlichen Rotor (10) und dem gegenwirkenden Rotor (21), um in Gegenrichtungen den nützlichen Rotor (10) und den gegenwirkenden Rotor (21) anzutreiben, derart, daß die Störungen durch die verbleibenden Momente, erzeugt auf dem Träger (6) durch die Bewegung des nützlichen Rotors (10) annulliert werden durch die gegenwirkende und gleichzeitige Bewegung des gegenwirkenden Rotors (21), wobei das Verhältnis der Geschwindigkeiten des nützlichen Rotors (10) und des gegenwirkenden Rotors (21) derart sind, daß das gesamte kinetische Moment des nützlichen Rotors (10) und des gegenwirkenden Rotors (21) gleich Null gehalten wird.

2. System nach Anspruch 1, dadurch gekennzeichnet, daß der Motor (3) Polmassen ohne Wicklungen (31) aufweist, die mit dem nützlichen Rotor (10) verbunden sind, und aufgewickelte Polmassen (32) aufweist, die mit dem gegenwirkenden Rotor (21) verbunden sind.

3. System nach Anspruch 2, dadurch gekennzeichnet, daß das entgegenwirkende Trägheitsorgan (20), das mit dem gegenwirkenden Rotor (21) verbunden ist, aus nützlichen oder Nutz-Elementen gebildet ist, die technische Funktionen sicherstellen, wie die Versorgungskreise und Reglungskreise der Wicklungen der aufgewickelten Polarmassen (32) des Motors (3).

4. System nach einem der Ansprüche 1 bis 3, dadurch gekennzeichnet, daß die Lager (12, 13) des Trägers des nützlichen Rotors (10) gebildet werden durch aktive magnetische Lager, deren Elektromagneten (122, 132) und die zugehörigen Detektoren (123, 133) auf dem Träger (6) gegenüber einer Außenseite (1) des nützlichen Rotors (10) angebracht sind, und daß die Lager (22, 23) des Trägers des gegenwirkenden Rotors (21) bzgl. des nützlichen Rotors (10) gebildet werden aus aktiven magnetischen Lagern, deren Elektromagneten (222, 232) und die zugehörigen Detektoren (223, 233) auf dem gegenwirkenden Rotor (21) gegenüber einer Innenseite (102) des nützlichen Rotors (10) angebracht sind.

5. System nach Anspruch 4, dadurch gekennzeichnet, daß die Steuerungsschaltkreise der aktiven Magnetlager (22, 23) des Trägers des gegenwirkenden Rotors (21) in dem gegenwirkenden Trägheitsorgan (20) angeordnet sind, das mit dem gegenwirkenden Rotor (21) verbunden ist, um wenigstens einen gegenwirkenden Trägheitsbereich zu bilden, der die Annullierung des kinetischen Gesamtmoments des nützlichen Rotors (10) und des gegenwirkenden Rotors (21) erlaubt.

6. System nach einem der Ansprüche 1 bis 5, dadurch gekennzeichnet, daß der Träger (6) gebildet wird von einem Satelliten oder einer Raumstation, und das nützliche Organ (1), das auf dem nützlichen Rotor (10) angebracht ist, gebildet wird durch ein drehendes Organ wie beispielsweise eine Antenne oder eine Sonnenplatte.

## Claims

1. Mechanical stabilization system using counter-rotation and a single motor, the system comprising a support to be stabilized (6), a working rotor (10) mounted on the support (6) by means of bearings (12, 13) and fixed to a working member (1) for which at least one parameter associated with the rotation of the working rotor (10) is variable as a function of time, an electric motor (3) for rotating the working rotor (10), a detector (3) interposed between the working rotor (10) and the support (6) for measuring said parameter associated with the rotation of the working rotor (10) on which a predetermined law of motion as a function of time is imposed, and a servo-control circuit receiving signals from the detector (33) for modifying the operating characteristics of the motor (3) so as to cause the working rotor (10) to comply with the said predetermined law of motion,
characterized in that the bearings (12, 13) supporting the working rotor (10) are frictionless bearings such as magnetic bearings or gas bearings, in that the system also includes a nested reaction rotor (21) which is mounted concentrically with the working rotor (10) by means of frictionless bearings (22, 23) such as magnetic bearings or gas bearings, and which support a reaction inertia member (20), and in that the motor (3) is interposed between the working rotor (10) and the reaction rotor (21) to rotate the working rotor (10) and the reaction rotor (21) in opposite directions in such a manner that the torque disturbances generated on the support (6) by the motion of the working rotor (10) are cancelled by the simultaneous reaction motion of the reaction motor (21), with the ratio of the speeds of the working rotor (10) and the reaction rotor (21) being such that the total angular momentum of the working rotor (10) and the reaction rotor (21) is kept equal to zero.

2. System according to claim 1, characterized in that the motor (3) has winding-free pole pieces (31) fixed to the working rotor (10) and wound pole pieces (32) fixed to the reaction rotor (21).

3. System according to claim 2, characterized in that the reaction inertia member (20) fixed to the reaction rotor (21) is constituted by working elements performing technical functions such as the power supply and servo-control circuits for the windings of the wound pole pieces (32) of the motor (3).

4. System according to any one of claims 1 to 3, characterized in that the bearings (12, 13) supporting the working rotor (10) are constituted by active magnetic bearings whose electromagnets (122, 132) and associated detectors (123, 133) are mounted on the support (6) facing an outside face (101) of the working rotor (10), and in that the bearings (22, 23) supporting the reaction rotor (21) relative to the working rotor (10) are constituted by active magnetic bearings whose electromagnets (222, 232) and associated detectors (223, 233) are mounted on the reaction rotor (21) facing an inside face (102) of the working rotor (10).

5. System according to claim 4, characterized in that the control circuits for the active magnetic bearings (22, 23) supporting the reaction rotor (21) are disposed in the reaction inertia member (20) fixed to the reaction rotor (21) in order to constitute at least a portion of the reaction inertia enabling the total angular momentum of the working rotor (10) and of the reaction rotor (21) to be cancelled.

6. System according to any one of claims 1 to 5, characterized in that the support (6) is constituted by a satellite or a spacecraft, and the working member (1) mounted on the working rotor (10) is constituted by a rotary member such as an antenna or a solar panel.
